# EUROPÄISCHE PATENTANMELDUNG

(11) **EP 4 050 786 A1**
(43) Veröffentlichungstag der Anmeldung: **31.08.2022**
(21) Anmeldenummer: 21159607.7
(22) Anmeldetag: 26.02.2021
(51) Int. Cl.: H02M 7/00, H02M 1/00, B25F 5/00, H02M 1/12, H02M 1/42

(54) **VORRICHTUNG UND SYSTEM ZUR VERSORGUNG EINER WERKZEUGMASCHINE MIT ELEKTRISCHER ENERGIE, SOWIE VERWENDUNG DER VORRICHTUNG DAZU**

(71) Anmelder: Hilti Aktiengesellschaft, 9494 Schaan (LI)
(72) Erfinder: Lacher, Michael, 86830 Schwabmünchen (DE); Ringler, Stefan, 86853 Schwabmühlhausen (DE); Sattler, Christian, 87640 Biessenhofen (DE)
(74) Vertreter: Hilti Aktiengesellschaft Corporate Intellectual Property

(57) **Zusammenfassung**

Die vorliegende Erfindung betrifft eine Vorrichtung zur Versorgung einer Werkzeugmaschine mit elektrischer Energie. Die Vorrichtung kann beispielsweise dazu verwendet werden, die Werkzeugmaschine mit einem Energienetz zu verbinden, so dass sie die Funktion eines Netzadapters ausüben kann. Die vorgeschlagene Vorrichtung umfasst ein erstes Bauteil zur Umwandlung einer Wechselspannung in eine Gleichspannung, sowie ein zweites Bauteil, das dazu eingerichtet ist, die von dem ersten Bauteil erzeugte Gleichspannung in einer Geräte-Gleichspannung umzuwandeln. In einem zweiten Aspekt betrifft die Erfindung ein System, das eine vorgeschlagene Vorrichtung, sowie eine Werkzeugmaschine umfasst, wobei die Werkzeugmaschine unter Verwendung der Vorrichtung mit elektrischer Energie versorgt werden kann. Darüber hinaus betrifft die Erfindung eine Verwendung der vorgeschlagenen Vorrichtung zur Versorgung einer Werkzeugmaschine mit elektrischer Energie. Vorteilhafterweise können mit der Erfindung besonders hohe Leistungsdichten erreicht und Leistungen von mehr als 1.700 Watt bereitgestellt werden.

## Beschreibung

Die vorliegende Erfindung betrifft eine Vorrichtung zur Versorgung einer Werkzeugmaschine mit elektrischer Energie. Die Vorrichtung kann beispielsweise dazu verwendet werden, die Werkzeugmaschine mit einem Energienetz zu verbinden, so dass sie die Funktion eines Netzadapters ausüben kann. Die vorgeschlagene Vorrichtung umfasst ein erstes Bauteil zur Umwandlung einer Wechselspannung in eine Gleichspannung, sowie ein zweites Bauteil, das dazu eingerichtet ist, die von dem ersten Bauteil erzeugte Gleichspannung in einer Geräte-Gleichspannung umzuwandeln. In einem zweiten Aspekt betrifft die Erfindung ein System, das eine vorgeschlagene Vorrichtung, sowie eine Werkzeugmaschine umfasst, wobei die Werkzeugmaschine unter Verwendung der Vorrichtung mit elektrischer Energie versorgt werden kann. Darüber hinaus betrifft die Erfindung eine Verwendung der vorgeschlagenen Vorrichtung zur Versorgung einer Werkzeugmaschine mit elektrischer Energie. Vorteilhafterweise können mit der Erfindung besonders hohe Leistungsdichten erreicht und Leistungen von mehr als 1.700 Watt bereitgestellt werden.

### Hintergrund der Erfindung:

Werkzeugmaschinen, wie Bohrhämmer, Winkelschleifer, Kernbohrgeräte oder Ähnliches werden üblicherweise über ein Netzkabel mit elektrischer Energie versorgt. Damit kann den Anforderungen an einen hohen und kontinuierlichen Energieverbrauch Rechnung getragen werden, so dass ein Nutzer der Werkzeugmaschine möglichst unterbrechungsfrei mit dem Gerät arbeiten kann. In den letzten Jahren ist allerdings ein Trend zu beobachten, wonach Werkzeugmaschinen unter Verwendung von Batterien oder Akkumulatoren ("Akkus") mit elektrischer Energie versorgt werden. Mit anderen Worten werden von den Herstellern Werkzeugmaschinen auf den Markt gebracht, die akku- oder batteriebetrieben sind. Nutzer versprechen sich davon, dass auf eine Verkabelung des Geräts bzw. die Verbindung des Geräts über ein Netzkabel mit einem Stromnetz verzichtet werden kann. Dies kann sich allerdings auf die mögliche, zur Verfügung stehende Arbeitszeit der Werkzeugmaschine auswirken, insbesondere dann, wenn auf der Baustelle keine Austausch-Batterien oder -Akkus vorhanden sind oder keine Möglichkeit vorhanden ist, die verwendeten Batterien oder Akkus aufzuladen, um sie weiter zu benutzen.

Insbesondere der Einsatz und Betrieb von leistungsstarken Elektro-Werkzeugmaschinen ist aufgrund der verfügbaren Batterien und deren Leistung zeitlich begrenzt. Für Anwendungen mit einem höhen Leistungsbedarf, wie die Durchführung von Kernbohrungen mit einem großen Durchmesser oder für Serienanwendungen kann die benötigte Leistung nicht wirtschaftlich sinnvoll durch die Verwendung von mehreren Batterien oder Ladeintervallen abgedeckt werden.

Um hier Abhilfe zu schaffen, sind im Stand der Technik Netzadapter bekannt, mit denen eine alternative Energieversorgung für batterie- oder akkubetriebene Werkzeugmaschine bereitgestellt werden kann. Allerdings sind konventionelle Netzadapter, wie sie aus dem Stand der Technik bekannt sind, aufgrund des zur Verfügung stehenden Bauraums, des Gewichts oder der Kostenvorgaben auf eine Leistung von kleiner als 1.200 Watt begrenzt. Bauraumunabhängige Lösungen sind häufig mit dem Nachteil verbunden, dass die entsprechenden Verbindungskabel einen unerwünscht großen Litzenquerschnitt von größer als 4 mm² aufweisen. Außerdem kann durch ein zusätzliches Gehäuse im Bereich der Werkzeugmaschine deren Handhabung erschwert werden.

Die Aufgabe, die der vorliegenden Erfindung zugrunde liegt, besteht darin, die vorstehend beschriebenen Mängel und Nachteile des Standes der Technik zu überwinden und eine Möglichkeit bereitzustellen, mit der eine Werkzeugmaschine sowohl mit Batterien oder Akkus, sowie über ein Energienetz mit elektrischer Energie versorgt werden kann. Insbesondere soll eine Vorrichtung zur Verfügung gestellt werden, mit der vor allem auch solche Werkzeugmaschinen optimal mit elektrischer Energie versorgt werden können, die einen hohen Leistungsbedarf haben. Ferner soll die Werkzeugmaschine, die auf diese Weise mit elektrischer Energie versorgt wird, besonders einfach und komfortabel zu handhaben sein.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zur Versorgung einer Werkzeugmaschine mit elektrischer Energie vorgesehen, wobei die Vorrichtung ein erstes Bauteil zur Umwandlung einer Wechselspannung in eine Gleichspannung umfasst, sowie ein zweites Bauteil, das dazu eingerichtet ist, die Gleichspannung in einer Geräte-Gleichspannung umzuwandeln.

Es ist im Sinne der Erfindung bevorzugt, das erste Bauteil als PFC-Bauteil zu bezeichnen, da es vorzugsweise ein PFC (Power Factor Correction) umfasst bzw. dazu eingerichtet ist, eine Power Factor Correction-Funktion auszuüben.

Bei dem PFC-Bauteil kann es sich um einen AC/DC-Gleichrichter handeln, wobei der AC/DC-Gleichrichter und damit das PFC-Bauteil insbesondere dazu eingerichtet sind, eine im Wesentlichen sinusförmige Energieaufnahme aus dem Energieversorgungsnetz zu gewährleisten. Darüber hinaus können der AC/DC-Gleichrichter und das PFC-Bauteil dazu eingerichtet sein, eine Gleichspannung (DC) zu erhöhen. Es kann beispielsweise im Sinne der Erfindung bevorzugt sein, dass mit dem PFC-Bauteil eine DC-Spannung dergestalt erhöht wird, dass sie einen höheren Wert annimmt als eine Spitzenspannung der anliegenden Netzspannung. Mit anderen Worten kann das PFC-Bauteil der vorgeschlagenen Vorrichtung dazu verwendet werden, eine Gleichspannung auf ein Spannungsniveau zu bringen, das höher ist als ein Spitzenwert der Spannung des Energieversorgungsnetzes. Vorzugsweise wirkt das PFC-Bauteil in diesem Fall wie ein Boost Converter.

Das zweite Bauteil der vorgeschlagenen Vorrichtung kann insbesondere als DC-DC-Wandler ausgebildet sein. Es kann sich insbesondere um einen Gleichspannungs-Gleichspannungs-Wandler handeln, wobei Gleichspannung im Sinne der Erfindung mit der üblichen Abkürzung DC und Wechselspannung mit der üblichen Abkürzung AC bezeichnet wird. Vorteilhafterweise ermöglicht die Vorrichtung in ihrer Gesamtheit eine Umwandlung von einer Wechselspannung in eine Geräte-Gleichspannung, so dass die aus einem öffentlichen Energienetz erhältlich Wechselspannung (AC) in einer Geräte-Gleichspannung umgewandelt werden kann, Dadurch wird es mit der Erfindung vorteilhafterweise ermöglicht, dass diese Geräte-Gleichspannung einfach und direkt von der Werkzeugmaschine als Verbraucher umgesetzt werden kann. Der Begriff «Geräte-Gleichspannung» ist im Sinne der Erfindung so zu verstehen, dass dies die für den Betrieb der Werkzeugmaschine bzw. des Werkzeuggeräts erforderliche Betriebsspannung ist. Diese Geräte-Gleichspannung wird vorteilhafterweise von der vorgeschlagenen Vorrichtung an die Werkzeugmaschine abgegeben, wobei die Geräte-Gleichspannung vorteilhafterweise durch einen AC-DC-Umwandlungsprozess durch das erste Bauteil und einen DC-DC-Umwandlungsprozess durch das zweite Bauteil der Vorrichtung erhalten wird. Mit anderen Worten wandelt das zweite Bauteil insbesondere diejenige Gleichspannung in eine Geräte-Gleichspannung um, die zuvor von dem ersten Bauteil durch einen Umwandlungsprozess aus der von dem Energienetz erhaltenen Wechselspannung erzeugt wurde.

Die Erfindung stellt bevorzugt eine Vorrichtung zur elektrischen Energieversorgung einer Werkzeugmaschine dar, mit der eine Werkzeugmaschine beispielsweise an ein vorzugsweise öffentlichen Energienetz («Stromnetz») angeschlossen werden kann, um aus diesem Energienetz elektrische Energie zu beziehen. Die Vorrichtung erfüllt vorzugsweise die Funktion eines Netzadapters, mit dem eine Werkzeugmaschine, die insbesondere auch batterie- oder akkubetrieben ausgebildet ist, mit elektrischer Energie versorgt werden kann. Mit anderen Worten kann die Erfindung eine alternative Energieversorgungsmöglichkeit für eine Werkzeugmaschine darstellen, die vorzugsweise zum Einsatz kommen kann, wenn eine Energieversorgung mit einer Batterie oder einem Akku nicht in Frage kommt. Das kann beispielsweise dann der Fall sein, wenn die mitgeführten Batterien oder Akkus leer sind oder aus anderen Gründen nicht zur Energieversorgung bereitstehen. Mit der Erfindung kann insbesondere ein AC-DC-Netzadapter für eine Werkzeugmaschine bereitgestellt werden, mit dem die Werkzeugmaschine beispielsweise über ein öffentliches Energienetz mit elektrischer Energie versorgt werden kann, wobei die vorgeschlagene Vorrichtung insbesondere dazu eingerichtet ist, die vom Energienetz bereitgestellte Wechselspannung in einer Geräte-Gleichspannung umzuwandeln, welche für den Betrieb der Werkzeugmaschine erforderlich ist. Es ist im Sinne der Erfindung insbesondere bevorzugt, dass die Vorrichtung dazu eingerichtet ist, die Werkzeugmaschine mit einem Energienetz zu verbinden. Dazu können Netzstecker und Netzkabel verwendet werden.

Es ist im Sinne der Erfindung bevorzugt, dass die Vorrichtung mit der Werkzeugmaschine verbunden werden kann, wobei die Vorrichtung nicht Bestandteil der Werkzeugmaschine ist. Darüber hinaus kann die Vorrichtung mit einem bevorzugt öffentlichen Energienetz verbunden werden. Dafür kann die Vorrichtung einen entsprechenden Netzstecker umfassen, der beispielsweise in eine Steckdose eingesteckt werden kann. Ferner kann die Vorrichtung ein Netzkabel zur Verbindung des Netzsteckers mit den Bauteilen der Vorrichtung umfassen. Mit diesem Netzkabel kann elektrische Energie, insbesondere ein Strom, von dem Netzstecker zu den Bauteilen der Vorrichtung transportiert werden. Es ist im Sinne der Erfindung darüber hinaus bevorzugt, dass die Energie für den Betrieb der Werkzeugmaschine von einem Generator bezogen wird.

Es ist im Sinne der Erfindung ganz besonders bevorzugt, dass die Vorrichtung dazu eingerichtet ist, eine Leistung von größer als 1.200 W abzugeben. Es ist im Sinne der Erfindung insbesondere bevorzugt, eine Leistung von größer 1.400 W, größer als 1.500 W oder größer als 1.600 W abzugeben. Am allermeisten bevorzugt ist es, dass die Vorrichtung eine Leistung von größer als 1.700 W abgibt. Auf diese Weise können mit der vorgeschlagenen Vorrichtung auch solche Werkzeugmaschinen mit elektrischer Energie versorgt werden, die bisher nicht mit einem Netzadapter betrieben werden konnten, da die Leistung, die von konventionellen Netzadaptern erbracht werden kann, nicht ausreichend für den Betrieb einzelner Werkzeugmaschinen ist.

Es ist im Sinne der Erfindung bevorzugt, dass die Komponenten der vorgeschlagenen Vorrichtung so ausgewählt sind, dass der vorgeschlagene Adapter eine Leistung von größer als 1.700 W erbringen kann. Insbesondere wird im Inneren der Vorrichtung ausreichend Bauraum bzw. Volumen bereitgestellt, um die einzelnen Komponenten und Bauelemente der Leistungselektronik so anzuordnen, dass die bei Betrieb des Adapters auftretende Verlustwärme optimal abgeführt werden kann. Es ist im Sinne der Erfindung bevorzugt, dass die Anordnung der Bauelemente so ausgewählt wird, dass die vorgeschlagene Vorrichtung einen höheren Wirkungsgrad aufweisen kann als vergleichbare Vorrichtungen, wie sie aus dem Stand der Technik bekannt sind.

Es ist im Sinne der Erfindung bevorzugt, dass die Vorrichtung in der Lage ist, die abgegebene Leistung von größer als 1.700 W im Wesentlichen konstant zu erbringen. Es handelt sich somit nicht um eine einzelne Peak-Leistung, die unter ganz bestimmten Umständen erreicht wird, sondern um die regelmäßige abgegebene Leistung der vorgeschlagenen Vorrichtung.

Als besonderer Vorteil kann mit der Erfindung ein Dauerbetrieb einer üblicherweise batterie- oder akkubetriebenen Elektro-Werkzeugmaschine ermöglicht werden, insbesondere für solche Werkzeugmaschinen, die einen Eingangsleistungsbedarf von größer als 1.500 Watt haben. Insbesondere kann ein hoher Anwenderkomfort durch die hohe Leistungsdichte der vorgeschlagenen Vorrichtung bereitgestellt werden.

Es ist im Sinne der Erfindung bevorzugt, dass das zweite Bauteil dazu eingerichtet ist, die Werkzeugmaschine von einem Potential des Energienetzes zu trennen. Diese Trennung wird im Sinne der Erfindung bevorzugt als galvanische Trennung bezeichnet. Es ist im Sinne der Erfindung somit bevorzugt, dass eine galvanische Trennung der Werkzeugmaschine von einem Potential des Energienetzes («Netzpotential») mit dem zweiten Bauteil erfolgt, so dass die vorgeschlagene Vorrichtung in Verbindung mit einer batterie- oder akkubetriebenen Werkzeugmaschine betrieben werden darf.

Es ist im Sinne der Erfindung bevorzugt, dass das erste Bauteil eine Gleichspannung in einem Bereich von 300 bis 500 V, bevorzugt in einem Bereich von 350 bis 450 V, besonders bevorzugt von 380 bis 420 V und am meisten bevorzugt von ca. 400 V ausgibt. Eine Gleichspannung in dieser Höhe kann besonders gut von dem zweiten Bauteil der Vorrichtung aufgenommen und in eine Geräte-Gleichspannung umgewandelt werden.

Darüber hinaus ist es im Sinne der Erfindung bevorzugt, dass das erste Bauteil DCM- und/oder CRM-geregelt ist. Bei dem Discontinous Current Mode (DCM) des ersten Bauteils ist es im Sinne der Erfindung bevorzugt, dass der Strom innerhalb eines jeden Schaltzyklus einmal auf Null zurückgeht. Beim Betrieb des ersten Bauteils im Critical Conduction Mode (CRM) wird der Wandler vorzugsweise an der Grenze zu einem Lückbetrieb betrieben. Dadurch gibt es keine oder weniger Probleme mit Recovery-Effekten in der Diode oder dem Schalttransistor. Darüber hinaus kann das erste Bauteil alternativ auch in einem Continous Current Mode (CCM) betrieben werden, bei dem der Strom innerhalb des Schaltzyklus nicht auf Null zurückgeht und eine Trägerfrequenz des Schalttransistors konstant gehalten wird. Es ist im Kontext der vorliegenden Erfindung besonders bevorzugt, das erste Bauteil im CC-Modus zu betreiben.

Es ist im Sinne der Erfindung bevorzugt, dass die Vorrichtung, insbesondere das zweite Bauteil, eine Geräte-Gleichspannung in einem Bereich von 20 bis 30 V, bevorzugt in einem Bereich von 22 bis 28 V, besonders bevorzugt von 24 bis 26 V und am meisten bevorzugt von 25 bis 25,5 V ausgibt. Am allermeisten bevorzugt ist eine Ausgangsspannung der Vorrichtung von 25,2 V. Tests haben gezeigt, dass diese Spannung besonders gut geeignet ist, wenn die vorgeschlagene Vorrichtung verwendet wird, eine Batterie oder einen Akku für die Energieversorgung einer Werkzeugmaschine zu ersetzen.

In einer ersten bevorzugten Ausgestaltung der Erfindung kann das erste Bauteil in einem Netzkabel angeordnet vorliegen. Es ist in dieser Ausgestaltung der Erfindung bevorzugt, dass das Netzkabel dazu eingerichtet ist, das erste Bauteil über einen Netzstecker mit einer Steckdose bzw. dem vorzugsweise öffentlichen Energienetz zu verbinden. Ein wesentlicher Vorteil dieser Ausgestaltung der Erfindung besteht darin, dass für die Anschlusskabel kleine Litzenquerschnitte von beispielsweise kleiner als 2,5 mm² verwendet werden kann, so dass die Vorrichtung kompakt ausgebildet sein kann und gut und komfortabel in der Handhabung ist. Die Anschlusskabel können beispielsweise das PFC-Bauteil mit dem Netzstecker, sowie das PFC-Bauteil mit dem zweiten Bauteil verbinden.

Es ist im Sinne der Erfindung bevorzugt, dass die vorgeschlagene Vorrichtung über die vorhandene Batterie- oder Akkuschnittstelle der Werkzeugmaschine mit der Werkzeugmaschine verbunden werden kann. Dadurch wird vorteilhafterweise eine universelle Verwendbarkeit der vorgeschlagenen Vorrichtung erreicht. Die Verbindung kann entweder unter Vermittlung einer Steckverbindung oder durch ein Gehäuse realisiert werden, in dem die Bauteile der Vorrichtung vorliegen oder verbaut sein können. Es ist in der ersten Ausgestaltung der Erfindung bevorzugt, dass das zweite Bauteil mit der Werkzeugmaschine verbindbar ist. Vorzugsweise kann das zweite Bauteil über eine lösbare Steckverbindung mit der Werkzeugmaschine verbunden werden. Es ist im Sinne der Erfindung bevorzugt, dass eine Verbindung zwischen den Bauteilen der vorgeschlagenen Vorrichtung über Klemmstellen hergestellt wird.

In einer alternativen, zweiten Ausgestaltung der Erfindung kann die Vorrichtung ein Gehäuse umfassen, wobei das Gehäuse dazu eingerichtet ist, das erste Bauteil und das zweite Bauteil aufzunehmen. Es ist im Sinne der Erfindung bevorzugt, dass das Gehäuse Abmessungen aufweist, die ähnlich sind zu den Abmessungen einer Batterie oder eines Akkus, die alternativ zur Energieversorgung der Werkzeugmaschine verwendet werden können. Dadurch ergibt sich eine gute Austauschbarkeit der Energieversorgungsmittel und der Nutzer der Werkzeugmaschine kann besonders einfach und komfortabel von einem Batterie- oder Akkubetrieb der Werkzeugmaschine in einen Netzadapter-Betrieb unter Verwendung der vorgeschlagenen Vorrichtung wechseln. Es ist in der ersten Ausgestaltung der Erfindung bevorzugt, dass keines der Bauteile der vorgeschlagenen Vorrichtung in einem Netzkabel angeordnet vorliegt, so dass die Handhabung der Vorrichtung für den Nutzer der Vorrichtung bzw. der Werkzeugmaschine erleichtert wird. Darüber hinaus kann eine Performanceverbesserung durch die direkte Kopplung des Netzeingangs mit der Werkzeugmaschine erreicht werden. Auf diese Weise vorteilhafterweise kann das Verhalten der Werkzeugmaschine adaptiert werden und die Verfügbarkeit der Werkzeugmaschine deutlich verbessert werden.

Es ist im Sinne der Erfindung bevorzugt, dass Betriebsparameter des ersten und/oder des zweiten Bauteils an die vorgeschlagene Vorrichtung übermittelt werden. Vorzugsweise ist in der Vorrichtung eine Kommunikationsverbindung vorgesehen, mit der Daten von dem ersten und/oder zweiten Bauteil an die Vorrichtung übertragen werden können. Bei diesen Daten kann es sich beispielsweise um eine Eingangsspannung und/oder um Daten, die den Funktionsstatus der Bauteile betreffen, handeln. Es ist im Sinne der Erfindung ganz besonders bevorzugt, dass beispielsweise die Eingangsspannung und/oder der generelle Funktionsstatus der PFC-Baugruppe an den vorgeschlagenen Adapter übermittelt wird. Dadurch wird der Adapter vorteilhafterweise in die Lage versetzt, seine Abgabeleistung anzupassen. Diese Anpassung erfolgt vorzugsweise in Abhängigkeit von der bevorzugt realen Eingangsspannung, die insbesondere von dem ersten Bauteil, d.h. dem PFC-Bauteil, übermittelt werden kann. Es ist im Sinne der Erfindung bevorzugt, dass die vorgeschlagene Vorrichtung ihre Abgabeleistung in Abhängigkeit von am ersten Bauteil ermittelten Eingangsspannung eingestellt wird.

Es ist im Sinne der Erfindung darüber hinaus bevorzugt, dass Fehlerzustände der Vorrichtung bzw. seiner Komponenten dem Nutzer bzw. Bediener der vorgeschlagenen Vorrichtung angezeigt werden. Dazu kann die Vorrichtung Schnittstellen umfassen, die als Machine-Machine-Interface (MMI) oder Human-Machine-Interface (HMI) ausgebildet sein können. Vorteilhafterweise kann unter Verwendung der MMI- bzw. HMI-Schnittstelle des Adapters eine Visualisierung der Daten ermöglicht werden.

Es ist in der zweiten Ausgestaltung der Erfindung bevorzugt, dass das Gehäuse eine Breite in einem Bereich von 7 bis 13 cm, bevorzugt in einem Bereich von 9 bis 11 cm aufweist. Darüber hinaus kann das Gehäuse eine Länge in einem Bereich von 12 bis 20 cm, bevorzugt in einem Bereich von 14 bis 17 cm aufweisen. Es ist darüber hinaus bevorzugt, dass das Gehäuse eine Höhe in einem Bereich von 5 bis 12 cm, bevorzugt in einem Bereich von 7 bis 10 cm aufweist. Auf diese Weise kann das Gehäuse ein Volumen in einem Bereich von 1.000 bis 1.700 cm³, bevorzugt in einem Bereich von 1.200 bis 1.500 cm³ aufweisen. Durch dieses Volumen kann die in der Werkzeugmaschine für den Batterie- oder Akkubetrieb vorhandene Batterie- oder Akkuschnittstelle für die Aufnahme der vorgeschlagenen Vorrichtung und die Verbindung der Vorrichtung mit der Werkzeugmaschine verwendet werden. Dies ermöglicht die universelle, flexible Einsetzbarkeit der Vorrichtung in verschiedenen Werkzeugmaschinen, die eine ähnliche oder gleiche Batterie- oder Akkuschnittstelle aufweisen.

Darüber hinaus ist es im Kontext der Erfindung bevorzugt, dass die Vorrichtung einen Netzfilter aufweist. Vorzugsweise liegt der Netzfilter auf der Eingangsseite des ersten Bauteils bzw. der Vorrichtung vor und ist damit in Richtung des Energienetzeingangs orientiert. Durch die Vorsehung des Netzfilters kann insbesondere sichergestellt werden, dass die Vorrichtung gesetzliche Vorgaben zur elektromagnetischen Verträglichkeit einhält.

In einem zweiten Aspekt betrifft die Erfindung ein System, das eine vorgeschlagene Vorrichtung und eine Werkzeugmaschine umfasst, wobei die Werkzeugmaschine unter Verwendung der Vorrichtung mit elektrischer Energie versorgt werden kann. Es ist im Sinne der Erfindung insbesondere bevorzugt, dass die Werkzeugmaschine dafür eingerichtet ist, mit der Vorrichtung verbunden zu werden. Dafür kann die Werkzeugmaschine über eine geeignete Batterie- oder Ackuschnittstelle umfassen, die beispielsweise das Gehäuse der vorgeschlagenen Vorrichtung in der zweiten Ausgestaltung der Erfindung aufnehmen kann. Alternativ kann die Werkzeugmaschine zur Aufnahme des zweiten Bauteils der Vorrichtung in der ersten Ausgestaltung der Erfindung eingerichtet sein. Insbesondere kann die vorgeschlagene Vorrichtung in dieser zweiten Ausgestaltung mittels einer Steckverbindung mit der Werkzeugmaschine verbunden vorliegen.

In einem weiteren Aspekt betrifft die Erfindung eine Verwendung der vorgeschlagenen Vorrichtung zur Versorgung einer Werkzeugmaschine mit elektrischer Energie. Die für die Vorrichtung eingeführten Begriffe, Definitionen und technischen Vorteile gelten vorzugsweise für das System und die Verwendung der Vorrichtung analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten ersten Ausgestaltung der Vorrichtung
- Fig. 2: Ansicht einer bevorzugten zweiten Ausgestaltung der Vorrichtung

### Ausführungsbeispiele und Figurenbeschreibung:

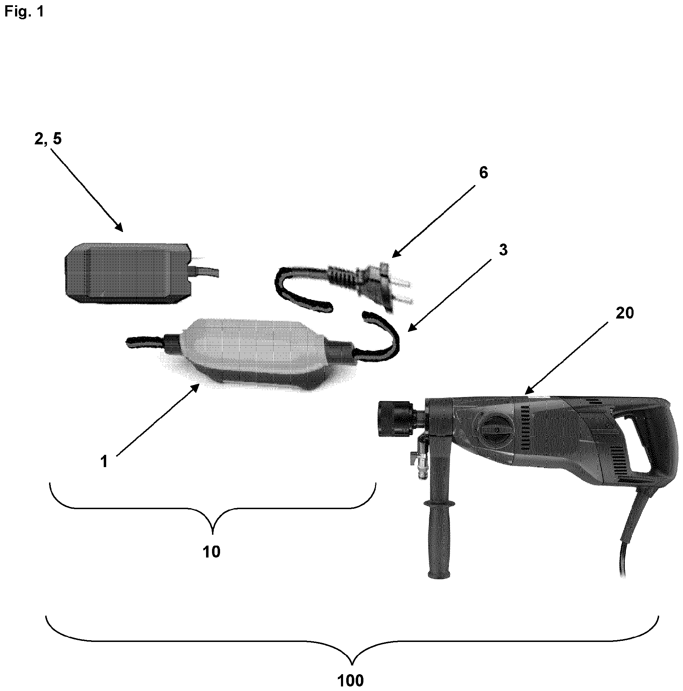

Figur 1 zeigt eine erste bevorzugte Ausgestaltung der vorgeschlagenen Vorrichtung 10, sowie eine beispielhafte Werkzeugmaschine 20. Mit der Vorrichtung 10 ist es insbesondere möglich, eine eingehende Wechselspannung in eine Gleichspannung umzuwandeln, wobei die abgegebene Gleichspannung insbesondere eine Geräte-Gleichspannung ist, die zur Energieversorgung einer Werkzeugmaschine 20 verwendet werden kann. Insbesondere zeigt das in Fig. 1 dargestellte Ausführungsbeispiel der Erfindung das erste Bauteil 1, sowie das zweite Bauteil 2 der Vorrichtung 10. Bei dem ersten Bauteil 1 handelt es sich vorzugsweise um ein PFC-Bauteil, das eine Power Factor Correction-Funktion bereitstellen kann. Das erste Bauteil 1 wird insbesondere dazu verwendet, eine Wechselspannung, die die Vorrichtung 10 über das vorzugsweise öffentliche Strom- oder Energienetz bezieht, in einer Gleichspannung umzuwandeln. Mögliche Eingangsspannungen der Vorrichtung 10 bzw. des ersten Bauteils 1 können beispielsweise bei 110 oder 230 V liegen. Das zweite Bauteil 2 ist dazu eingerichtet, die vom ersten Bauteil erzeugte Gleichspannung in einer Geräte-Gleichspannung umzuwandeln. Das zweite Bauteil 2 stellt mithin einen Gleichspannungs-Gleichspannungs-Wandler dar, dessen erzeugte Geräte-Gleichspannung zur Energieversorgung der Werkzeugmaschine 20 verwendet werden kann. Die Energieversorgung kann dadurch insbesondere potentialfrei erfolgen bzw. es kann eine galvanische Trennung bereitgestellt werden. Die Bauteile 1, 2 der Vorrichtung 10 können über eine elektrische leitende Steckverbindung oder ein Kabel miteinander verbunden vorliegen. Es können auch Klemmstellen zur Verbindung der Komponenten 1, 2 der Vorrichtung 10 verwendet werden.

In der in Fig. 1 dargestellten ersten Ausgestaltung der Erfindung liegt das erste Bauteil 1 der Vorrichtung 10 in einem Netzkabel 3 integriert vor. Das Netzkabel 3 stellt vorzugsweise die Verbindung zwischen der Vorrichtung 10, bzw. seinem ersten Bauteil 1 und einem Energie- oder Stromnetz her. Dazu kann das Netzkabel 3 einen Netzstecker 6 aufweisen, der beispielsweise in eine Steckdose gesteckt werden kann. Die Vorrichtung 10 und die Werkzeugmaschine 20 bilden ein System 100, in dem die Vorrichtung 10 als Netzadapter und zur Versorgung der Werkzeugmaschine 20 mit elektrischer Energie verwendet werden kann. Der Vorteil bei dieser ersten Ausgestaltung der Erfindung besteht darin, dass für das Netzkabel 3, welches das erste Bauteil 1 mit dem Netzstecker 6 verbindet, sowie für das Kabel, welches die Verbindung zwischen den Bauteilen 1, 2 der Vorrichtung 10 herstellt, kleine Litzenquerschnitte von kleiner als 2,5 mm² verwendet werden können.

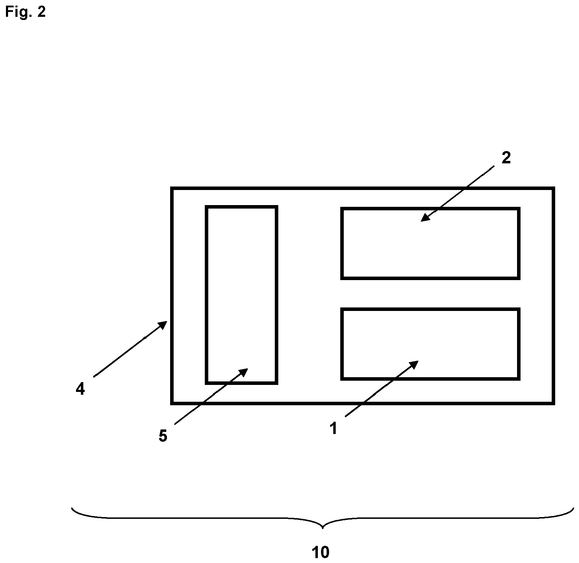

Figur 2 zeigt eine zweite bevorzugte Ausgestaltung der vorgeschlagenen Vorrichtung 10, wobei die Vorrichtung 10 in dieser Ausgestaltung ein Gehäuse 4 aufweist. Die Bauteile 1, 2 der Vorrichtung 10 können in dem Gehäuse 4 angeordnet werden, wobei die Komponenten der Vorrichtung 10 so - wie beispielhaft in Fig. 2 dargestellt - oder anders innerhalb des Gehäuses 4 arrangiert vorliegen können. Die Vorrichtung 10 kann darüber hinaus einen Netzfilter 5 umfassen, der vorzugsweise ebenfalls im Gehäuse 4 der Vorrichtung 10 angeordnet ist. Der Vorteil dieser Ausgestaltung der Erfindung besteht darin, dass hier kein Bauteil 1, 2 im Netzkabel 3 integriert vorliegt und dass durch die direkte Kopplung zwischen Netzeingang und Werkzeugmaschine 20 eine überraschend gute Performance erreicht werden kann. Durch die Unterbringung der Bauteile 1, 2 der Vorrichtung 10 in einem Gehäuse 4, das vorzugsweise ähnliche Abmessungen wie eine übliche Batterie oder ein üblicher Akku aufweist, kann vorteilhafterweise die bereits an der Werkzeugmaschine 20 vorhandene Batterie- oder Akkuschnittstelle für die Aufnahme bzw. den Anschluss der Vorrichtung 10 verwendet werden.

Es kann im Sinne der Erfindung auch bevorzugt sein, dass nur der Netzfilter 5 ausserhalb des Gehäuses 4 der Vorrichtung 10 vorliegt. In dieser Ausgestaltung der Erfindung wird der Netzfilter 5 als das kabelseitige Gehäuse der Vorrichtung 10 verstanden. Mit anderen Worten liegt in dieser Ausgestaltung der Erfindung nur der Netzfilter 5 der Vorrichtung 10 in dem kabelseitigen Gehäuse 4 der Vorrichtung vor, während die Bauteile 1, 2 der Vorrichtung 10 im Gehäuse 4 verbleiben.

### Bezugszeichenliste

- 1: erstes Bauteil
- 2: zweites Bauteil
- 3: Netzkabel
- 4: Gehäuse
- 5: Netzfilter
- 6: Netzstecker
- 10: Vorrichtung
- 20: Werkzeugmaschine
- 100: System

## Patentansprüche

1. Vorrichtung (10) zur Versorgung einer Werkzeugmaschine (20) mit elektrischer Energie
**dadurch gekennzeichnet, dass**
die Vorrichtung (10) ein erstes Bauteil (1) zur Umwandlung einer Wechselspannung in eine Gleichspannung umfasst, sowie ein zweites Bauteil (2), das dazu eingerichtet ist, die Gleichspannung in einer Geräte-Gleichspannung umzuwandeln.

2. Vorrichtung (10) nach Anspruch 1
**dadurch gekennzeichnet, dass**
das zweite Bauteil (2) dazu eingerichtet ist, die Werkzeugmaschine (20) von einem Potential des Energienetzes zu trennen.

3. Vorrichtung (10) nach Anspruch 1 oder 2
**dadurch gekennzeichnet, dass**
das erste Bauteil (1) eine Gleichspannung in einem Bereich von 300 bis 500 V, bevorzugt in einem Bereich von 350 bis 450 V, besonders bevorzugt von 380 bis 420 V und am meisten bevorzugt von ca. 400 V ausgibt.

4. Vorrichtung (10) nach einem der vorhergehenden Ansprüche
**dadurch gekennzeichnet, dass**
das zweite Bauteil (2) eine Geräte-Gleichspannung in einem Bereich von 20 bis 30 V, bevorzugt in einem Bereich von 22 bis 28 V, besonders bevorzugt von 24 bis 26 V und am meisten bevorzugt von 25 bis 25,5 V ausgibt.

5. Vorrichtung (10) nach einem der vorhergehenden Ansprüche
**dadurch gekennzeichnet, dass**
die Vorrichtung (10) dazu eingerichtet ist, eine Leistung von größer als 1200 W abzugeben.

6. Vorrichtung (10) nach einem der vorhergehenden Ansprüche
**dadurch gekennzeichnet, dass**
die Vorrichtung (10) einen Netzfilter (5) aufweist.

7. Vorrichtung (10) nach einem der vorhergehenden Ansprüche
**dadurch gekennzeichnet, dass**
das erste Bauteil (1) in einem Netzkabel (3) angeordnet vorliegt.

8. Vorrichtung (10) nach einem der vorhergehenden Ansprüche
**dadurch gekennzeichnet, dass**
ein Netzkabel (3) der Vorrichtung (10) einen Netzstecker (6) aufweist.

9. Vorrichtung (10) nach einem der vorhergehenden Ansprüche
**dadurch gekennzeichnet, dass**
das zweite Bauteil (2) mit der Werkzeugmaschine (20) verbindbar ist.

10. Vorrichtung (10) nach einem der Ansprüche 1 bis 6
**dadurch gekennzeichnet, dass**
die Vorrichtung (10) ein Gehäuse (4) umfasst, wobei das Gehäuse (4) dazu eingerichtet ist, das erste Bauteil (1) und das zweite Bauteil (2) aufzunehmen.

11. Vorrichtung (10) nach Anspruch 10
**dadurch gekennzeichnet, dass**
das Gehäuse (4) eine Breite in einem Bereich von 7 bis 13 cm und bevorzugt in einem Bereich von 9 bis 11 cm aufweist,
das Gehäuse (4) eine Länge in einem Bereich von 12 bis 20 cm und bevorzugt in einem Bereich von 14 bis 17 cm aufweist und/oder
das Gehäuse (4) eine Höhe in einem Bereich von 5 bis 12 cm und bevorzugt in einem Bereich von 7 bis 10 cm aufweist.

12. Vorrichtung (10) nach Anspruch 10 oder 11
**dadurch gekennzeichnet, dass**
das Gehäuse (4) ein Volumen in einem Bereich von 1.000 bis 1.700 cm³ und bevorzugt in einem Bereich von 1.200 bis 1.500 cm aufweist.

13. System (100) umfassend eine Vorrichtung (10) nach einem der vorhergehenden Ansprüche und eine Werkzeugmaschine (20), die unter Verwendung der Vorrichtung (10) mit elektrischer Energie versorgbar ist.

14. Verwendung einer Vorrichtung (10) nach einem der Ansprüche 1 bis 12 zur Versorgung einer Werkzeugmaschine (20) mit elektrischer Energie.
